Europäisches Patentamt

European Patent Office

Office européen des brevets

(19)

(11) Veröffentlichungsnummer: **0 110 816**
**B1**

(12) ## EUROPÄISCHE PATENTSCHRIFT

(45) Veröffentlichungstag der Patentschrift:
15.07.87

(21) Anmeldenummer: 83730114.2

(22) Anmeldetag: 17.11.83

(51) Int. Cl.⁴: **G 02 B 6/38**

(54) **Vorrichtung zur lagegenauen Positionierung der LWL-Faserenden von LWL-Bauteilen.**

(30) Priorität: 30.11.82 DE 3244689

(43) Veröffentlichungstag der Anmeldung:
13.06.84 Patentblatt 84/24

(45) Bekanntmachung des Hinweises auf die Patenterteilung:
15.07.87 Patentblatt 87/29

(84) Benannte Vertragsstaaten:
CH DE FR GB LI

(56) Entgegenhaltungen:
DE - A - 2 807 860
FR - A - 2 386 830
FR - A - 2 472 736

(73) Patentinhaber: **Siemens Aktiengesellschaft Berlin und München, Wittelsbacherplatz 2, D-8000 München 2 (DE)**

(72) Erfinder: **Hopp, Werner, Kilstetter Strasse 66, D-1000 Berlin 37 (DE)**
Erfinder: **Malorny, Bertold, Damwildsteig 3, D-1000 Berlin 27 (DE)**

## Beschreibung

Die Erfindung betrifft eine Vorrichtung zur lagegenauen Positionierung und Befestigung eines LWL-Faserendes an ein LWL-Bauteil, insbesondere an einen LWL-Schalter und -Steckverbinder.

Vorrichtungen der eingangs definierten Art werden für die bekannten LWL-Bauteile im Prinzip entweder durch den Einsatz und die Verwendung von komplizierten und im Hinblick auf die Genauigkeit der Konturen sehr aufwendig anzufertigenden Einzelteilen realisiert oder aber durch konstruktiv weniger aufwendigeren Hilfsmitteln ermöglicht, bei denen jedoch ein kostenintensives Nachjustieren der Faserenden zu entsprechenden Bezugskonturen der entsprechenden Vorrichtungen erforderlich ist.

Die der Erfindung zugrunde liegende Aufgabe besteht darin, einerseits die Vorrichtung selbst mit konstruktiv einfachen Einzelteilen zu erstellen und andererseits den Aufwand für das Justieren der LWL-Faserenden sowohl in bezug auf die Ausrichtung zueinander als auch zur Vorrichtung selbst auf ein Minimum zu reduzieren. Erfindungsgemäss wird dies durch die Kombination der Merkmale 1.1 bis 1.4 erreicht.

Mit dem rechtwinklig zu der ebenen Anlagefläche verlaufenden Führungsschlitz zur Aufnahme des LWL-Bauteils ist in einfacher Weise mit der Schlitztiefe die Lage der LWL-Faserenden auf dem LWL-Bauteil des entsprechenden LWL-Bauteiles fixiert. Die Schlitztiefe und die Schlitzbreite sind so bemessen, dass jedes LWL-Bauteil im rechten Winkel zu der ebenen Anlagefläche der Vorrichtung eine justierfreie Aufnahme findet und die LWL-Faserenden mittels der Fasenfläche des Schiebeteils in der für das jeweilige LWL-Bauteil erforderlichen Lage an das jeweilige LWL-Bauteil angedrückt werden können. Zur Längenpositionierung werden die LWL-Faserenden im Bereich ihrer Faserstirnflächen planparallel an die Anschlagfläche des Distanzteils geschoben und anschliessend die LWL-Faserenden durch Angabe eines Klebemittels mit dem entsprechenden LWL-Bauteil nichtlösbar verbunden. Das Schiebeteil ist für die ungehinderte Klebemittelangabe mit einer Aussparung versehen. Die annähernd um 45° zur Anlagefläche der Vorrichtung geöffnete Fasenfläche des Schiebeteils gewährleistet einen verschiebungsfreien Andruck der LWL-Faserenden an das jeweilige LWL-Bauteil.

Bei dem aus der DE-A 2 807 860 bekannten Verbinder für Lichtleitmonofasern werden die Lichtwellenleiter mit einem V-förmig ausgebildeten Zentrierkanal eines Stabes in ähnlicher Weise gegen zwei zueinander rechtwinklig angeordneten Flächen lagepositioniert. Zusätzlich werden die Lichtwellenleiter mittels eines elastischen Bügels in dieser Lage festgeklemmt. Dieser Verbinder ist jedoch nicht zur Aufnahme von LWL-Bauteilen geeignet, da der Zentrierkanal annähernd den gesamten Bereich der Anlageflächen überdeckt. Darüber hinaus schirmt der elastische Bügel, der den Stab auf die rechtwinklig zueinander stehenden Flächen drückt, den Lichtwellenleiter gänzlich nach aussen ab, so dass das Heranführen von Klebemittel an die Lichtwellenleiter und deren Anlageflächen nicht erfolgen kann.

Gemäss einer vorteilhaften Ausgestaltung der Erfindung ist das Schiebeteil derart gestaltet, dass die der Anlagefläche und der Begrenzungsfläche des LWL-Bauteils zugewandten Flächen des Schiebeteils einen Winkel von kleiner als 90° bilden und das Schiebeteil derart unter der Einwirkung einer Feder steht, dass das Schiebeteil nach dem Lösen aus einer durch eine Raststellung vorgegebenen Ruhelage die LWL-Faserenden mit der Fasenfläche linienförmig annähernd im Winkel von 45° zur Anlagefläche an diese und die Begrenzungsfläche des LWL-Bauteils andrückt. Damit ist sichergestellt, dass das Schiebeteil im Andruckzustand der LWL-Faserenden nicht mit dem LWL-Bauteil in Kraftschluss gerät und durch eventuelles Verkanten bzw. einseitigen Druck auf die LWL-Faserenden die genaue Lagepositionierung der LWL-Faserenden verändert bzw. eine Beschädigung derselben vermieden ist. Mit dem Einwirken der Feder wird das Schiebeteil stets mit konstantem Druck gegen die Anlagefläche der Vorrichtung und die Begrenzungsfläche des LWL-Bauteils gedrückt, so dass die LWL-Faserenden auf dem LWL-Bauteil ohne Justiervorgänge lagegenau positioniert sind.

Die Erfindung wird in einem figürlich dargestellten Ausführungsbeispiel näher erläutert, wobei die Figur 1 auszugsweise einen LWL-Schalter mit dem LWL-Bauteil zeigt, die Figur 2 und 2a die Vorrichtung zur lagegenauen Positionierung der LWL-Faserenden im einzelnen erläutert und die Figur 3 eine Vorrichtung zur lagegenauen Positionierung der LWL-Faserenden eines LWL-Steckverbinders zeigt.

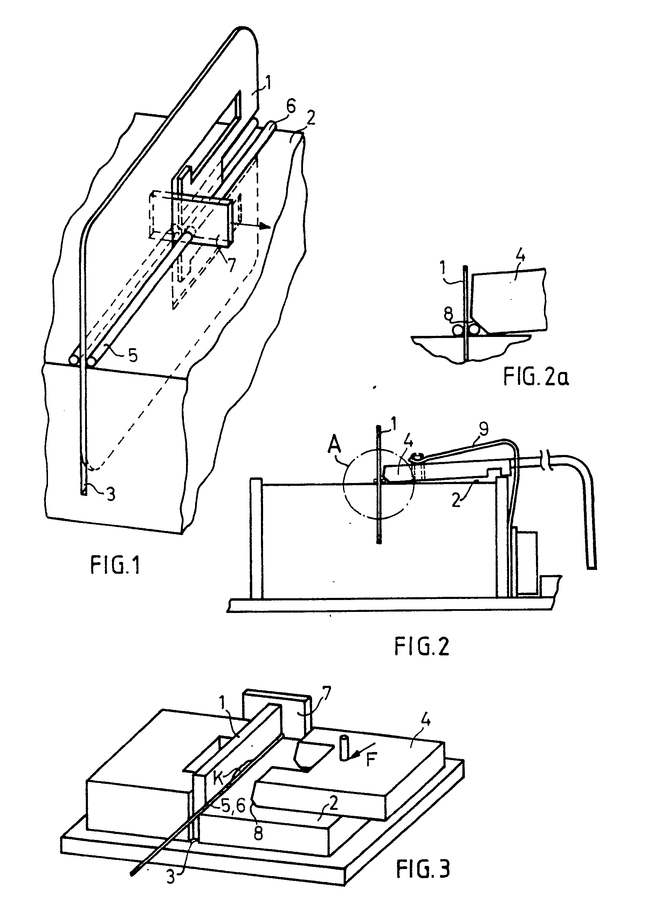

In der Figur 1 ist das LWL-Bauteil eines LWL-Schalters dargestellt, welches die LWL-Faserenden 5, 6 aufnimmt. Die Vorrichtung zur lagegenauen Positionierung der LWL-Faserenden weist die ebene Anlagefläche 2 auf, in der der rechtwinklig zu dieser Anlagefläche 2 verlaufende Führungsschlitz 3 zur Aufnahme des die LWL-Faserenden 5, 6 aufnehmenden LWL-Bauteils eingearbeitet ist. Um den genauen Abstand der Faserstirnflächen der LWL-Faserenden 5, 6 zu erreichen, wird eine nicht dargestellte Führung auf der ebenen Anlagefläche 2 der Vorrichtung das Distanzteil 7 in Pfeilrichtung eingeschoben. Der Führungsschlitz 3 ist in seinen Abmassen derart ausgestaltet, dass das LWL-Bauteil 1 im rechten Winkel zu der ebenen Anlagefläche 2 lagegenau fixiert ist.

Die Figur 2 und 2a zeigen die Vorrichtung zur lagegenauen Positionierung der LWL-Faserenden auf dem LWL-Bauteil 1 in schematischer Darstellung. Auch hier ist zur ebenen Anlagefläche 2 der Vorrichtung der nicht bezeichnete Führungsschlitz im rechten Winkel zur Anlagefläche 2 angeordnet, in dem das LWL-Bauteil 1 eingeschoben ist. Weiterhin ist das Schiebeteil 4 zu erkennen, welches unter der Krafteinwirkung der Feder 9 in seiner Arbeitsstellung dargestellt ist. Zum besseren Verständnis ist eine vergrösserte Darstellung der Einzelheit bei A mit der Figur 2a dargestellt. Hieraus wird ersichtlich, dass das Schiebeteil 4 so ausgeführt ist, dass die der Anlagefläche 2, Figur 2 und der Begrenzungsfläche des LWL-Bauteils 1 zugewandten Flächen des Schiebeteils 4 einen Winkel kleiner als 90° bilden. Weiterhin ist erkennbar, dass die Fasenfläche 8 des Schiebeteils 4 zu der Anlagefläche 2, Figur 2 annähernd im Winkel von 45° geöffnet ist, so dass das Schiebeteil 4 im Andruckzustand die LWL-Faserenden linienförmig annähernd im Winkel von 45° zur Anlagefläche 2, Figur 2 an diese und die Begrenzungsfläche des LWL-Bauteils 1 andrückt. Das Schiebeteil 4 gerät im Andruckzustand nicht mit dem LWL-Bauteil 1 in eine kraftschlüssige Verbindung, so dass ein Verkanten des Schiebeteils 4 und damit eine Veränderung der lagegenauen Positionierung der LWL-Faserenden ausgeschlossen ist.

Die Figur 3 zeigt die Vorrichtung zur lagegenauen Positionierung der LWL-Faserenden eines LWL-Steckverbinders. Auch hier bilden zwei nicht bezeichnete konstruktiv sehr einfache Einzelteile den Führungsschlitz 3, in dem das LWL-Bauteil 1 des LWL-Steckverbinders eingeschoben ist. Mit der ebenen Anlagefläche 2 ist die Lage der LWL-Faserenden 5, 6 auf dem LWL-Bauteil 1 fixiert. Das Schiebeteil 4 steht in gleicher Weise, wie bereits bei der Figur 2 beschrieben, unter der Einwirkung der Federkraft F, die das Schiebeteil 4 mit seiner Fasenfläche 8 gegen die LWL-Faserenden an die Begrenzungsfläche des LWL-Bauteils 1 andrückt. Zur Längenpositionierung der LWL-Faserenden ist die Anschlagfläche des Distanzteils 7 vorgesehen. Das Schiebeteil 4 weist in seinem Mittenbereich eine nicht bezeichnete Aussparung auf, die im Andruckzustand des Schiebeteils 4 die Klebemittelangabe K an die LWL-Faserenden 5, 6 und an die Begrenzungsflächen des LWL-Bauteils ermöglicht.

**Patentansprüche**

1. Vorrichtung zur lagegenauen Positionierung und Befestigung eines LWL-Faserendes an ein LWL-Bauteil, insbesondere an einen LWL-Schalter und -Steckverbinder, mit folgenden Merkmalen:

1.1 die Vorrichtung weist eine ebene Anlagefläche (2) mit einem rechtwinklig zu dieser verlaufenden Führungsschlitz (3) zur Aufnahme des das LWL-Faserende (5, 6) aufnehmenden LWL-Bauteils (1) auf,

1.2 ein Schiebeteil (4), das mit dem Führungsschlitz (3) zusammenarbeitet, und der Führungsschlitz (3) sind derart ausgebildet, dass das LWL-Faserende (5, 6) durch planparalleles Andrücken mittels des Schiebeteils (4) an die Anlagefläche (2) parallel zur Längsrichtung des Führungsschlitzes (3) und an eine sich dazu rechtwinklig anschliessende Begrenzungsfläche des LWL-Bauteils (1) funktionsgerecht positionierbar ist,

1.3 das Schiebeteil (4) ist im Bereich der Andruckfläche an das LWL-Faserende (5, 6) mit einer zur Anlagefläche (2) annähernd um 45° geöffneten Fasenfläche (8) versehen und im Mittenbereich der des LWL-Bauteils (1) zugewandten Seite mit einer Aussparung zur Klebemittelangabe an das LWL-Faserende (5, 6) ausgestattet,

1.4 die Vorrichtung weist ein Distanzteil (7) auf, bei dem das LWL-Faserende (5, 6) im Bereich der Faserstirnfläche des Distanzteils (7) positionierbar ist.

2. Vorrichtung nach Anspruch 1, gekennzeichnet durch folgende Merkmale:

2.1 das Schiebeteil (4) ist derart gestaltet, dass die der Anlagefläche (2) und der Begrenzungsfläche des LWL-Bauteils (1) zugewandten Flächen des Schiebeteils (4) einen Winkel kleiner als 90° bilden,

2.2 das Schiebeteil (4) steht derart unter der Einwirkung einer Feder (9), dass das Schiebeteil (4) nach dem Lösen aus einer durch eine Raststellung vorgegebenen Ruhelage das LWL-Faserende (5, 6) mit der Fasenfläche (8) linienförmig annähernd im Winkel von 45° zur Anlagefläche (2) an diese und die Begrenzungsfläche des LWL-Bauteils (1) andrückt.

**Claims**

1. A device for the precise positioning and fixture of an end of an optical waveguide fibre to a light-wave guide component, in particular to a light-wave guide switch and connector, with the following features:

1.1 the device exhibits a flat supporting face (2) with a guide slot (3) extending at right angles thereto to accommodate the light-wave guide component (1) receiving the end of the optical waveguide fibre (5, 6);

1.2 a sliding part (4), cooperating with the guide slot (3), and the guide slot (3) are so formed that the end of the optical waveguide fibre (5, 6) can be positioned in the functionally-correct attitude by plane parallel pressure of the sliding part (4) against the supporting face (2) parallel with the longitudinal direction of the guide slot (3) and against an adjoining bounding face of the light-wave guide component (1) at right angles thereto;

1.3 the sliding part (4) is provided with a chamfered face (8) opened at roughly 45° to the support face (2) in the area of the contact face at the end of the optical waveguide fibre (5, 6), and provided with an opening for delivery of adhesive to the end of the optical waveguide fibre (5, 6) in the central area of the side facing the light-wave guide component (1); and

1.4 the device exhibits a spacing part (7) by which the end of the optical waveguide fibre (5, 6) can be positioned in the area of the fibre end face of the spacing part (7).

2. A device as claimed in Claim 1, characterised by the following features:

2.1 the sliding part (4) is so formed that the faces of the sliding part (4) facing towards the supporting face (2) and the bounding face of the light-wave guide component (1) form an angle of less than 90°; and

2.2 the sliding part (4) comes under the influence of a spring (9) so that after being released from an inoperative position determined by the position of a stop the sliding part (4) presses the end of the optical waveguide fibre (5, 6) against the supporting face (2) and the bounding face of the light-wave guide component (1) with the linearly-formed chamfered face (8) at an angle of substantially 45° to the supporting face (2).

**Revendications**

1. Dispositif pour le positionnement et la fixation précis de l'extrémité d'une fibre formant guide d'ondes optiques sur un composant de liaison de guides d'ondes optiques, notamment un interrupteur et un connecteur pour guides d'ondes optiques, présentant les caractéristiques suivantes:

1.1 le dispositif comporte une surface d'appui (2) munie d'une fente de guidage (3) qui s'étend perpendiculairement à cette surface et sert à recevoir le composant (1) de liaison de guides d'ondes optiques recevant l'extrémité (5, 6) de fibres formant guides d'ondes optiques,

1.2 un élément coulissant (4), qui coopère avec la fente de guidage (3), et la fente de guidage (3) sont agencés de telle sorte que l'extrémité (5, 6) des fibres formant guides d'ondes optiques, peut être positionnée, conformément à la fonction, grâce à son application, selon une disposition à faces planes parallèles, au moyen de l'élément coulissant (4) contre la surface d'appui (2) parallèlement à la direction longitudinale de la fente de guidage (3) et contre une surface limite, se raccordant perpendiculairement à cette dernière, du composant (1) de liaison de guides d'ondes optiques,

1.3 l'élément coulissant (4) comporte, dans la zone de la zone d'application contre la surface (5, 6) des fibres formant guides d'ondes optiques, une surface biseautée (8), inclinée approximativement de 45° par rapport à la surface d'appui (2), et dans la zone centrale, tournée vers le composant (1) de liaison de guides d'ondes optiques, un évidement pour l'application d'un adhésif sur l'extrémité (5, 6) des fibres formant guides d'ondes optiques,

1.4 le dispositif comporte une entretoise (7), avec laquelle l'extrémité (5, 6) de fibres formant guides d'ondes optiques, peut être positionnée au voisinage de la surface frontale des fibres de l'entretoise (7).

2. Dispositif suivant la revendication 1, caractérisé par les caractéristiques suivantes:

2.1 l'élément coulissant (4) est agencé de telle sorte que ses surfaces, tournées vers la surface d'appui (2), et la surface limite du composant (1) de liaison de guides d'ondes optiques, font un angle inférieur à 90°,

2.2 l'élément coulissant (4) est soumis à l'action d'un ressort (9) de telle sorte qu'après sa libération à partir d'une position de repos prédéterminée par une position d'encliquetage, l'élément coulissant (4) repousse l'extrémité (5, 6) des fibres formant guides d'ondes optiques linéairement par sa surface biseautée (8) et approximativement sous l'angle de 45° par rapport à la surface d'appui (2), contre cette dernière et contre la surface limite du composant (1) de liaison de guides d'ondes optiques.